(19) Europäisches Patentamt
European Patent Office
Office européen des brevets

(11) Veröffentlichungsnummer : **0 046 729**
**B1**

(12) # EUROPÄISCHE PATENTSCHRIFT

(45) Veröffentlichungstag der Patentschrift : **19.12.84**

(51) Int. Cl.³ : **C 08 L 77/00**, C 09 B 29/36, C 09 B 35/00

(21) Anmeldenummer : **81810332.7**

(22) Anmeldetag : **14.08.81**

(54) **Verfahren zum Färben faserbildender Polyamide in der Masse mit Azofarbstoffen.**

(30) Priorität : **20.08.80 CH 6285/80**

(43) Veröffentlichungstag der Anmeldung : **03.03.82 Patentblatt 82/09**

(45) Bekanntmachung des Hinweises auf die Patenterteilung : **19.12.84 Patentblatt 84/51**

(84) Benannte Vertragsstaaten : **CH DE FR GB IT LI**

(56) Entgegenhaltungen : **FR-A- 1 551 400**

(73) Patentinhaber : **CIBA-GEIGY AG**
**Postfach**
**CH-4002 Basel (CH)**

(72) Erfinder : **Lienhard, Paul, Dr.**
**Kirschgartenstrasse 14**
**CH-4402 Frenkendorf (CH)**
Erfinder : **Rouèche, Armand, Dr.**
**Lerchenstrasse 38**
**CH-4103 Bottmingen (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 046 729 B1

Jouve, 18, rue St-Denis, 75001 Paris, France

**Beschreibung**

Die Erfindung betrifft ein Verfahren zum Färben faserbildender Polyamide in der Masse mit Azofarbstoffen der Formel

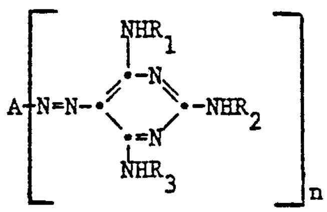

(1)

worin A den Rest einer Diazo- oder Tetrazokomponente, $R_1$, $R_2$ und $R_3$ H-Atome, Alkyl-, Cycloalkyl-, Phenylalkyl- oder Arylreste und n die Zahl 1 oder 2 bedeuten.

Der Rest A kann sich von beliebigen Diazokomponenten ableiten, beispielsweise der Benzol-, oder Naphthalinreihe. Diese können die in Azofarbstoffen üblichen Substituenten enthalten, insbesondere Sulfonsäure- oder Carboxylgruppen, ferner Halogenatome, wie Fluor, Chlor oder Brom, Carbamoyl-, Sulfamoyl- oder Cyangruppen, Alkyl-, Alkoxy- oder Alkylmercaptogruppen mit 1-6 C, gegebenenfalls durch Halogenatome, Methyl- oder Methoxygruppen, substituierte Phenoxy- oder Phenylmercaptogruppen, Naphtoxygruppen, Phenalkylgruppen oder Acylgruppen, wie Alkanoylgruppen mit 2-6 C, ferner Acylaminogruppen, wie Alkanoylaminogruppen mit 2-6 C, wie Acetylamino-, Chloracetylamino-Propionylaminogruppen oder Benzoylaminogruppen, Alkylsulfamoylgruppen mit 1-6 C, Alkylcarbamoylgruppen mit 2-6 C, gegebenenfalls durch Chloratome, Methyl- oder Methoxygruppen, substituierte Phenylsulfonyl- Phenylsulfamoyl- oder Phenylcarbamoylgruppen, ferner Phenylazogruppen.

Als Reste heterocyclischer Diazokomponenten kommen vor allem 5- oder 6-gliedrige, N-haltige Hèterocyclen aromatischen Charakters in Betracht, beispielsweise der Pyrrol-, Pyrazol-, Thiazol-, Oxdiazol-, Thiodiazol-, Triazol-, Tetrazol- oder Pyridin-Reihe angehören. Auch mehrkernige kondensierte Heterocyclen kommen in Betracht, die dann vorzugsweise einen anellierten Benzolring aufweisen, wie beispielsweise die gegebenenfalls substituierten Benzthiazol-, Benztriazol-, Indol-, Indazol-, Chinolin-, Phtalimid- und Phtalsäureanhydridringe. Diese ein- oder mehrkernigen heterocyclischen Diazoreste können ebenfalls in Azofarbstoffen übliche Substituenten der oben aufgezählten Art enthalten.

Bedeutet A einen Phtalimidrest, dann vorzugsweise einen solchen der Formel

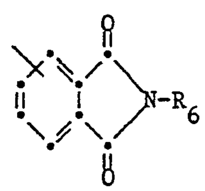

worin $R_6$ ein H-Atom, $C_1$-$C_4$-Alkylgruppe oder einen gegebenenfalls durch Chloratome, Methyl- und Methoxygruppen substituierten Phenylrest bedeutet.

Der Rest A kann auch den Rest einer Tetrazokomponente darstellen, sich also von einem Diamin ableiten, von einem Diaminodiphenyl oder einem Diaminodiphenylderivat, dessen Benzolkerne über ein Brückenglied verbunden sind. Brückenglieder können zweiwertige Atome, wie O oder S oder zweiwertige Gruppen sein, beispielsweise eine gegebenenfalls durch Alkylgruppen mit 1-6 C substituierte Aminogruppe, gradkettige oder verzweigte Alkylenreste, vorzugsweise mit 1-6 C, beispielsweise die Methylen-, 1,2-Alkylen- oder 2,2-Propylengruppe, Cycloalkylgruppen, wie die 1,1-Cyclohexylgruppe, ferner die Reste —CO—, —SO— oder $—SO_2—$, —CH=CH—, —N=N—, $—SO_2O—$, $—SO_2—NR—$, $—SO_2NHSO_2—$, —RNCO— oder —RN—CO—NR—, worin R ein H-Atom oder eine Alkylgruppe mit 1-6 C bedeutet.

Sofern in Formel 1) $R_1$, $R_2$ und $R_3$ Alkylreste bedeuten, dann vorzugsweise solche mit 1-6 C, wobei diese Alkylreste substituiert sein können, beispielsweise durch Hydroxylgruppen, Alkoxygruppen mit 1-4 C, Cyan- oder Phenylgruppen. Als Beispiele von Cycloalkylresten seien Cyclohexylreste genannt. Bedeuten $R_1$, $R_2$ oder $R_3$ Arylreste, dann vorzugsweise Phenylreste, die Chloratome, Methyl-, Methoxy- oder Sulfogruppen enthalten können.

Die Farbstoffe der Formel 1) enthalten vorzugsweise 1 oder 2 Carboxyl- oder Sulfogruppen im Molekül.

Von besonderem Interesse sind Farbstoffe der Formel 1), worin A einen Phenyl- oder Naphthylrest bedeutet, insbesondere einen solchen der Formel

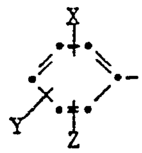

worin X ein H- oder Halogenatom, eine Alkyl- oder Alkoxygruppe mit 1-6 C, eine Alkoxycarbonylgruppe mit 2-6 C, eine Nitro- Cyan- oder Trifluormethyl, Sulfo- oder Carboxylgruppe oder Alkanoylaminogruppe mit 2-6 C, eine gegebenenfalls durch Chloratome, Methyl- oder Methoxygruppen substituierte Phenoxy-, Phenylcarbamoyl-, Phenoxycarbonyl-, Phenylsulfonyl-, Phenoxysulfonylgruppe oder eine Gruppe der Formel

$$-SO_2NR_4R_5$$

worin $R_4$ ein H-Atom, ein Alkylgruppe mit 1-6 C, eine gegebenenfalls durch Chloratome der Methylgruppen substituierte Phenylgruppe, $R_5$ ein H-Atom oder eine Alkylgruppe mit 1-6 C bedeutet, Y ein H- oder Halogenatom, eine Methyl-, Carboxyl- oder Sulfogruppe und Z ein H- oder Halogenatom, oder eine Methylgruppe bedeuten.

Bevorzugt sind Farbstoffe der Formel

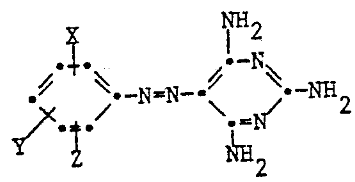

worin X, Y und Z die oben angegebene Bedeutung haben.

Ebenfalls bevorzugt sind Farbstoffe der Formel

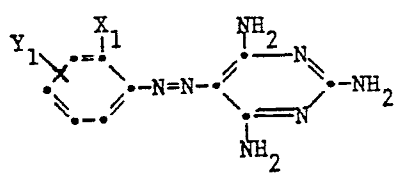

worin $X_1$ eine Carbonsäure- oder Sulfonsäuregruppe, $Y_1$ ein H-Atom, eine Methyl- oder Carbonsäuregruppe bedeuten, sowie die neuen Farbstoffe der Formel

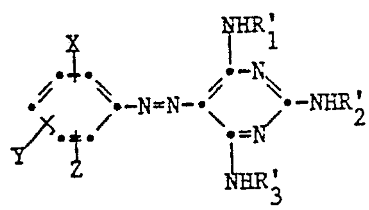

worin X, Y, Z die oben angegebene Bedeutung haben, einer der Reste $R_1'$, $R_2'$ und $R_3'$ eine gegebenenfalls durch Chloratome, Methyl- oder Methoxygruppen substituierte Sulfophenylgruppe, die übrigen H-Atome, Alkylgruppen mit 1-6 C oder gegebenenfalls durch Chloratome, Methyl- oder Methoxygruppen substituierte Phenylgruppen bedeuten.

Aus der Reihe der Disazofarbstoffe sind von besonderem Interesse jene der Formel

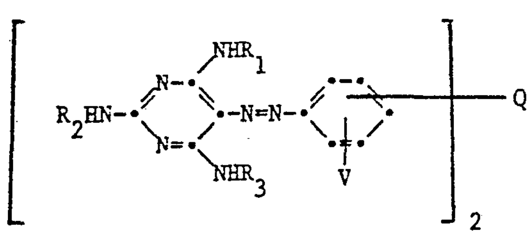

worin $R_1$, $R_2$ und $R_3$ die oben angegebene Bedeutung, Q eine direkte Bindung oder ein Brückenglied, V ein H- oder Chloratom, eine Methyl- oder Methoxygruppe bedeuten.

Die erfindungsgemässen Farbstoffe sind zum Teil bekannt (DE-PS 1 719 080 und Chem. Pharma Bull. *7,* Seite 1-6 (1959)) und können nach den dort beschriebenen Verfahren durch Kuppeln eines diazotierten Monoamins oder tetrazotierten Diamins mit einem bzw. zwei Mol eines Triaminopyrimidins der Formel

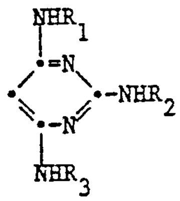

nach üblichen Methoden in saurem, neutralem oder alkalischem Mittel, gegebenenfalls in Gegenwart wasserlöslicher Lösungsmitteln, wie Aethanol oder Dioxan, erhalten werden.

Verwendet man als Diazokomponenten 1-Aminobenzol-2-sulfonsäure- oder -carbonsäureamide, so bilden sich bei der Diazotierung Benztriazinone, die vor der Kupplung in alkalischem Mittel durch Behandeln mit Alkalien gespalten werden müssen.

Als Beispiele von Diazokomponenten seien genannt :

Aminobenzol
1-Amino-2-, -3- oder -4-chlorbenzol
1-Amino-2,3-, -2,4-, -3,4- oder 2,5-dichlorbenzol
1-Amino-3-chlor-4-methylbenzol
1-Amino-2- oder 4-methylbenzol
1-Amino-2- oder 4-methoxybenzol
1-Aminobenzol-2, -3-, oder -4-sulfonsäure
1-Aminobenzol-2,5-disulfonsäure
1-Amino-2-chlorbenzol-4-sulfonsäure
1-Amino-4-chlorbenzol-3-sulfonsäure
1-Amino-2,5-dichlorbenzol-4-sulfonsäure
1-Aminobenzol-2-, -3- oder -4-sulfonsäurephenylester
1-Aminobenzol-2-, -3- oder -4-sulfonsäureamid
1-Aminobenzol-2-, -3- oder -4-sulfonsäuremethylamid
1-Aminobenzol-2-, -3- oder -4-sulfonsäureäthylamid
1-Aminobenzol-2-, -3- oder -4-sulfonsäurephenylamid
1-Aminobenzol-2-, -3- oder -4-carbonsäure
1-Aminobenzol-2,3- -2,4- oder -3,4-dicarbonsäure
1-Amino-2-chlor-5-benzoesäure
1-Aminobenzol-2-, -3- oder -4-carbonsäuremethylester
1-Aminobenzol-2-, -3- oder -4-carbonsäureäthylester
1-Aminobenzol-2-, -3- oder -4-carbonsäurephenylester
1-Aminobenzol-2-, -3- oder -4-carbonsäureamid
1-Aminobenzol-2-, -3- oder -4-carbonsäureäthylamid
1-Aminobenzol-2-, -3- oder -4-carbonsäureanilid
1-Aminobenzol-2-, -3- oder -4-carbonsäure-N-äthylanilid
1-Amino-2-, -3- oder -4-methylsulfonylbenzol
4-Aminoazobenzol
4-Aminoazobenzol-2'-, -3'- oder -4'-sulfonsäure
4-Amino-3'-chlorazobenzol
4-Amino-2-methylazobenzol
4-Amino-4'-methylazobenzol
4-Amino-2-methoxyazobenzol
2-Amino-diphenyläther
2-Amino-4,4'-dichlor-2'-sulfo-diphenyläther
2-Amino-benzophenon
4-Amino-4'-methyl-benzophenon
2-Amino-4'-methyl-diphenylsulfon
3-Amino-4-chlor-diphenylsulfon
2-Amino-3'-sulfo-diphenylsulfon
1-Amino-naphthalin-4-sulfonsäure
2-Amino-naphthalin-4-sulfonsäure
2-Amino-naphthalin-3,6-disulfonsäure
4-Aminophthalsäure-anhydrid

3-Aminophthalsäure-anhydrid
3- oder 4-Aminophthalsäure-imid
3-Amino-phthalsäure-2'-methyl-5'-chlorphenylimid
3-Amino-phthalsäure-2'-methoxy-5'-chlorphenylimid
Als Tetrazokomponenten seien genannt :

Benzidin
3,3'-Dichlorbenzidin
3,3'-Dimethylbenzidin
3,3'-Dimethoxybenzidin
4,4'-Diaminostilben
2,2', 3,3', und 4,4'-Diaminodiphenylsulfon
3,3'-Diaminobenzophenon
4,4'-Diaminodiphenyloxid
4,4'-Diaminodiphenylsulfid
4,4'-Diaminodiphenylmethan
2,2-Bis-(4'-aminophenyl)-propan
4,4'-Diamino-diphenylamin
4,4'-Diamino-diphenylharnstoff
4,4'-Diamino-benzoesäureanilid
4,4'-Diamino-azobenzol.

Die Kupplungskomponenten, stellen bekannte Verbindungen dar. Man erhält sie nach bekannten Verfahren, wie z. B. durch Umsetzen von Trichlorpyrimidin mit Ammoniak oder den entsprechenden Aminen, beispielsweise Methylamin, Aethylamin, Propylamin, Isopropylamin, N-Butylamin, n-Hexylamin, n-Oktylamin, Cyclohexylamin, Anilin, 2-, -3- oder -4-Chloranilin, 2-, -3- oder -4-Methylanilin oder Anilino-2, -3- oder -4-sulfonsäure. Die drei Chloratome des Trichlorpyrimidins können wahlweise durch gleiche oder verschiedene der genannten Amine ausgetauscht werden.

Als faserbildende Polyamide kommen für das vorliegende Verfahren die linearen Polyamide in Betracht, wie sie beispielsweise aus ε-Caprolactam (« Perlon »®, Nylon 6), aus ω-Aminoundecansäure (« Rilsan »), aus Hexamethylendiamin und Adipinsäure (« Nylon » 6,6) oder aus analogen Ausgangsstoffen herstellbar sind. Ferner kommen auch Mischpolyamide in Betracht, beispielsweise aus ε-Caprolactam und Hexamethylendiamin und Adipinsäure.

Die Farbstoffe werden nach bekannten Verfahren in fester oder flüssiger Form oder als Lösung mit dem Polyamid vermischt und die erhaltene Mischung gegebenenfalls zwischengetrocknet.

Bevorzugt werden die zu färbenden Polyamide in Form von Pulvern, Körnern oder Schnitzeln mit dem trockenen Farbstoffpulver paniert, d. h. mechanisch derart vermischt, dass die Oberfläche dieser Teilchen mit einer Schicht des Farbstoffes überzogen ist. Der Farbstoff liegt vorteilhaft in fein verteilter Form vor.

Anstelle der reinen Farbstoffe kann man in vielen Fällen mit Vorteil Präparate verwenden, die neben dem Farbstoff einen Trägerstoff enthalten, vorzugsweise ein Ca- oder Mg-Salz einer höheren Fettsäure, beispielsweise der Stearin- oder Behensäure.

Die den Farbstoff bzw. das Farbstoffpräparat enthaltenden Polyamidteilchen werden geschmolzen und nach bekannten Verfahren versponnen oder sonstwie, beispielsweise zu Folien oder anderen Formteilen, beispielsweise Spritzgussartikeln, verformt.

Man kann den Farbstoff bzw. das Farbstoffpräparat auch in fester oder flüssiger Form in das geschmolzene Polyamid einbringen und dieses anschliessend verspinnen bzw. verformen.

Man erhält gleichmässig gefärbte Gegenstände, die sich durch eine hohe Licht-, Nass-, Reib- und Thermofixierechtheit auszeichnen.

Die Farbstoffe sind im gefärbten Material gleichmässig und fein verteilt. Obwohl ihre Löslichkeiten in organischen Solventien wie chlorierten Kohlenwasserstoffen, niederen Ketonen, Estern und Alkoholen nicht hoch sind, liegen sie im Polyamid oft in gelöster Form vor.

Die gefärbten Gegenstände enthalten zweckmässig 0,01 bis 3 % Farbstoff.

Es ist überraschend, dass die erfindungsgemäss zu verwendenden Azofarbstoffe die hohen Temperaturen und die reduzierenden Bedingungen des Schmelzprozesses ohne wesentliche Zersetzung überstehen und die textilen Eigenschaften der Fasern nicht merklich verschlechtern.

Sulfogruppenhaltige Azoverbindungen der vorliegenden Anmeldung zeichnen sich gegenüber den aus der DDR-Patentschrift Nr. 107'065 bekannten Arylazopyrazolonsulfonsäuren durch eine bessere Thermostabilität aus. Sie können daher in einem wesentlich breiteren Temperaturbereich und über längere Spinnzeiten eingesetzt werden.

Carboxygruppen enthaltende Azoverbindungen der vorliegenden Anmeldung sind den in der DE-OS 24 09 754 beschriebenen, von sauren Gruppen freien Azopyridin-Verbindungen in der Reibechtheit (Ausbluten) überlegen.

In den nachfolgenden Beispielen bedeuten die Teile, sofern nichts anderes angegeben, Gewichtsteile, die Prozente Gewichtsprozente und die Temperaturen sind in Celsiusgraden angegeben.

Beispiel 1

5 g Azofarbstoff der Formel 1) oder einer isomeren Formel

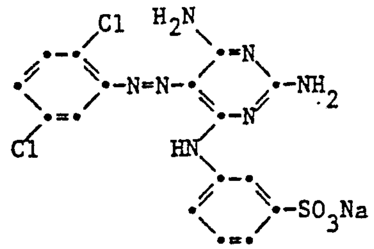

1)

werden in 1 000 ml warmen Wasser gelöst, mit 500 g Polycaprolactam-Granulat versetzt und die Lösung unter ständigem Rühren oder Umwälzen zum Sieden erhitzt. Nach 1/2 bis 1 Std. Färbezeit werden 5 ml Essigsäure oder 5-10 g Ammoniumacetat zugegeben und weitergekocht, bis der überwiegende Teil des Farbstoffs auf das Polymer aufgezogen ist. Dann filtriert man das Granulat ab, wäscht es gründlich mit Wasser und trocknet es. Durch Schmelzspinnen erhält man ein gleichmässig und kräftig gelb gefärbtes Fasermaterial mit sehr guter Wasser-, Wasch-, Shampoo-, Lösungsmittel-, Reib-, Thermofixier-, Peroxydbleich- und Lichtechtheit.

Beispiel 2

99 g Polyamid aus ε-Caprolactam (Polyamid 6) werden in Form von Schnitzeln mit 1 g des Azofarbstoffs der Formel

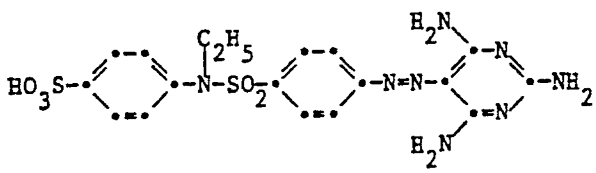

2)

trocken paniert. Die so behandelten Schnitzel werden bei 270-280° in einem Extruder versponnen. Es entsteht ein gleichmässig gelb gefärbtes Fasermaterial von hohen Licht-, Nass- und Thermofixierechtheiten.

Beispiel 3

60 g des Azofarbstoffes der Formel

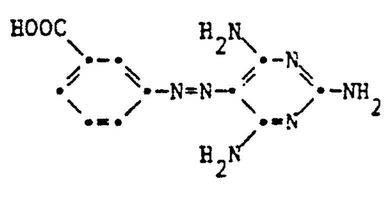

3)

und 60 g Mg-Stearat werden in einem Laborkneter bei 150-160° bearbeitet. Nach Erreichen einer homogenen Mischung wird das abgekühlte, spröde Produkt gemahlen. Man erhält ein 50 % Farbstoff enthaltendes Farbstoffpräparat.

98 g Polyamid 6 werden in Granulat-Form mit 2 g des Farbstoffpräparates trocken paniert. Durch Verspinnen des so behandelten Granulats bei 270-280° in einem Extruder erhält man ein kräftig gelbes Fasermaterial mit sehr guten Gebrauchsechtheiten.

Beispiele 4-56

Ebenfalls sehr echte gleichmässig gelb bis orange gefärbte Fasern erhält man durch Massefärbung von Polyamid 6 analog den Beispielen 1-3 unter Verwendung eines der in Tabelle 1 aufgeführten Monoazofarbstoffe bzw. eines der in Tabelle 2 aufgeführten Disazofarbstoffe.

Tabelle 1

| Bsp. | Monoazofarbstoffe aus | | Nuance PA 6 |
|---|---|---|---|
| | Diazokomponente | Kupplungskomponente | |
| 4 | 1-Aminobenzol-2-sulfonsäure | 2,4,6-Triaminopyrimidin | grünstichig gelb |
| 5 | 1-Aminobenzol-4-sulfonsäure | 2,4,6-Triaminopyrimidin | " |
| 6 | 1-Amino-4-chlorbenzol-2-sulfonsäure | 2,4,6-Triaminopyrimidin | gelb |
| 7 | 1-Amino-2-chlorbenzol-5-sulfonsäure | 2,4,6-Triaminopyrimidin | grünstichig gelb |
| 8 | 1-Amino-2-chlorbenzol-4-sulfonsäure | 2,4,6-Triaminopyrimidin | " |
| 9 | 1-Amino-3-chlor-6-methylbenzol-4-sulfonsäure | 2,4,6-Triaminopyrimidin | gelb |
| 10 | 1-Amino-2,5-dichlorbenzol-4-sulfonsäure | 2,4,6-Triaminopyrimidin | gelb |
| 11 | 1-Amino-benzol-2,4-disulfonsäure | 2,4,6-Triaminopyrimidin | gelb |
| 12 | 3-Amino-phthalsäure | 2,4,6-Triaminopyrimidin | rotst.gelbst. |
| 13 | 4-Amino-phthalsäure | 2,4,6-Triaminopyrimidin | rotst. gelb |
| 14 | 1-Amino-4-sulfo-benzol-2-carbonsäure | 2,4,6-Triaminopyrimidin | gelb |
| 15 | 2-Amino-3'-sulfodiphenylsulfon | 2,4,6-Triaminopyrimidin | gelb |
| 16 | 1-Aminobenzol-2-sulfonsäure-N-äthyl-N-4'-sulfophenylamid | 2,4,6-Triaminopyrimidin | gelb |
| 17 | 1-Amino-2,5-dichlorbenzol-4-sulfonsäure | 2,4,6-Triäthylaminopyrimidin | rotstichig gelb |
| 18 | 1-Amino-2,5-dichlorbenzol-4-sulfonsäure | 2,4,6-Tri-n-butylaminopyrimidin | rotstichig gelb |
| 19 | 1-Amino-2,5-dichlorbenzol-4-sulfonsäure | 2,4,6-Tri-phenylaminopyrimidin | orange |
| 20 | 1-Aminobenzol-2-sulfonsäure-N-äthyl-N-4'-sulfophenylamid | 2,4,6-Tri-äthylaminopyrimidin | gelb |
| 21 | " | 2,4,6-Tri-β-hydroxyäthylamino-pyrimidin | gelb |
| 22 | 2,3-Dichloranilin | Mischung von 2,4-Diamino-6-(3'-sulfophenylamino)-pyrimidin und 2,6-Diamino-4-(3'-sulfophenylamino)-pyrimidin | gelb |
| 23 | 3,4-Dichloranilin | " | gelb |
| 24 | 3-Trifluormethyl-anilin | " | grünst. gelb |
| 25 | 3-Sulfamoyl-anilin | " | " " |
| 26 | 2-Cyananilin | " | gelb |

Tabelle 1 (Fortsetzung)

| Bsp. | Monoazofarbstoff aus Diazokomponente | Kupplungskomponente | Nuance PA 6 |
|---|---|---|---|
| 27 | 4-Chloranilin | Mischung von 2,4-Dicyclohexylamino-6-(3'-sulfophenylamino)-pyrimidin und 2,6-Di-cyclohexylamino-4-(3'-sulfophenylamino)-pyrimidin | gelb |
| 28 | 4-Chloranilin | 2-Cyclohexylamino-4,6-di-(3'-sulfophenyl-amino)-pyrimidin | rotstichig gelb |
| 29 | 1-Amino-2-chlorbenzol-4-sulfonsäure | Mischung aus 2,4-Diäthylamino-6-(4'-chlorphenylamino)-pyrimidin und der isomeren 2,6,4-Verbindung | rotstichig gelb |
| 30 | 2,5-Dichloranilin | Mischung aus 2,4-Diamino-6-(3'-methyl-4'-sulfophenylamino)-pyrimidin und der isomeren 2,6,4-Verbindung | gelb |
| 31 | 2,5-Dichloranilin | Mischung aus 2,4-Diamino-6-(2'-methoxy-5'-sulfophenylamino)-pyrimidin und der isomeren 2,6,4-Verbindung | gelb |
| 32 | 3-Amino-4-methyl-benzoesäure | 2,4,5-Triaminopyrimidin | grünst. gelb |
| 33 | 3-Amino-benzoesäure | 2,4,6-Triaminopyrimidin | gelb |
| 34 | 1-Amino-3-chlor-4-methyl-6-benzolsulfonsäure | 2,4,6-Triaminopyrimidin | " |
| 35 | 1-Amino-4-methyl-6-benzolsulfonsäure | 2,4,6-Triaminopyrimidin | grünst. gelb |
| 36 | 1-Amino-benzol-2,5-disulfonsäure | 2,4,6-Triaminopyrimidin | " " |
| 37 | 3-Aminophthalsäureanhydrid | 2,4,6-Triaminopyrimidin | gelb |
| 38 | 4-Aminophthalsäure-2'-methoxy-5'-chlor-phenylimid | 2,4,6-Triaminopyrimidin | rotst. gelb |
| 39 | 4-Aminophthalsäure-4'-chlorphenylimid | 2,4,6-Triaminopyrimidin | " |
| 40 | 3-Aminophthalsäure-2'-methyl-5'-chlorphenylimid | 2,4,6-Triaminopyrimidin | gelb |
| 41 | 5-Amino-isophthalsäure | 2,4,6-Triaminopyrimidin | grünst. gelb |
| 42 | 3-Aminophthalsäure | 2,4,6-Triphenylaminopyrimidin | orange |

Tabelle 1 (Fortsetzung)

| Bsp. | Monoazofarbstoff aus | | Nuance PA 6 |
|---|---|---|---|
| | Diazokomponente | Kupplungskomponente | |
| 43 | Amino-terephthalsäure | 2,4,6-Triaminopyrimidin | grünst. gelb |
| 44 | 3-Aminophthalsäure | 2,4,6-Tri-isopropylamino-pyrimidin | gelb |
| 45 | 4-Aminophthalsäure-phenylimid | 2,4,6-Triaminopyrimidin | rotst. gelb |
| 46 | 1-Amino-3-methyl-4-chlor-6-benzolsulfonsäure | 2,4,6-Triaminopyrimidin | grünst. gelb |
| 47 | 2-Amino-4-sulfonsäure-benzoesäure | 2,4,6-Triaminopyrimidin | grünst. gelb |
| 48 | 1-Amino-3-chlor-4-methyl-6-benzolsulfonsäure | 2,4,6-Tribenzylamino-pyrimidin | grünst. gelb |
| 49 | 3-Aminophthalsäure | 2,4,6-Trimethylamino-pyrimidin | rotst. gelb |

Tabelle 2

| Bsp. | Disazofarbstoffe | | Nuance PA 6 |
|---|---|---|---|
| | Diazokomponente | Kupplungskomponente | |
| 50 | 4,4'-Diamino-diphenyl-sulfon | Mischung aus 2,4-Diamino-6-(3'-sulfophenylamino)-pyrimidin und der isomeren 2,6,4-Verbindung | rotstichig gelb |
| 51 | 3,3'-Diamino-diphenyl-sulfon | " | grünstichig gelb |
| 52 | 2,2'-Diamino-4,4'-dichlor-diphenylsulfid | " | gelb |
| 53 | 4,4'-Diaminodiphenyl-methan | " | gelb |
| 54 | 4,4'-Diamino-2,2'-dimethyl-diphenyl | " | gelb |
| 55 | 4,4'-Diaminodiphenyl-sulfon | Mischung aus 2,4-Diäthyl-amino-6-(3'-sulfophenyl-amino)-pyrimidin und der isomeren 2,6,4-Verbindung | goldgelb |
| 56 | 2-Amino-4-(4'-aminophenyl-sulfonylamino)-benzolsulfonsäure | 2,4,6-Triaminopyrimidin | gelb |

Beispiel 57

Der Farbstoff gemäss Beispiel 12 wird wie folgt erhalten :

45 Teile 3-Aminophthalsäure-dinatriumsalz (0,2 mol) werden in 200 Teilen Wasser gelöst dann nach Zugabe von 90 Vol. Teilen 30 %-iger Salzsäure bei einer Temperatur von 0 bis 3 °C mittels 50 Volumen Teile einer 4 N $NaNO_2$-Lösung diazotiert, wobei das so hergestellte Diazonium-Salz nach kurzem Inlösung-gehen ausfällt.

25 Teile 2,4,6-Triaminopyrimidin (0,2 mol) werden zuerst in 300 Teilen Wasser bei 55 °C gelöst dann bei Raumtemperatur aufgefällt. Danach wird die obige Diazoniumsalz-Suspension innert ca. 90 Minuten bei einer Temperatur von 15-20 °C und bei einem pH-Wert von 8-9 unter allmählicher Zugabe von cirka 57 Vol.-Teilen 30 %-iger Natronlauge der Kupplungskomponente-Suspension zugesetzt. Nach 2 Stunden ist die Kupplung beendet. Nach Zugabe von 72 Teilen 30 %-iger Salzsäure wird die erhaltene Suspension auf den pH-Wert 1 gestellt und danach während 30 Minuten bei 80 °C weitergerührt. Nach üblicher Filtration und neutralem Waschen mittels Wasser wird der so erhaltene Presskuchen bei 80 °C unter Vakuum getrocknet. Man erhält 64 Teile (95,5 % der Theorie) eines gelben pulvrigen Farbstoffes der Formel

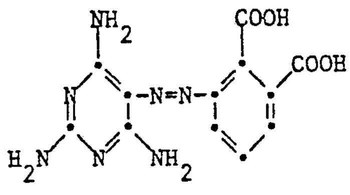

der 1 mol Kristallwasser enthält.

Verbrennungsanalyse : Theorie (mit 1 mol $H_2O$) $C_{12}H_{11}N_7O_4 \cdot H_2O$

C % 42,98 H % 3,88 N % 29,2 (MG : 335)

Gefunden : C % 42,5 H % 3,7 N % 28,5

Beispiel 58

Setzt man an Stelle von 3-Aminophthalsäure-Derivat die gleiche Menge 4-Aminophthalsäure-dinatriumsalz ein, so werden 63 Teile eines gelben Farbstoffes der Formel erhalten,

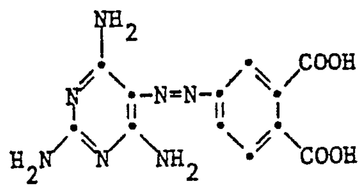

welcher ebenfalls 1 Mol Kristallwasser enthält

$C_{12}H_{11}N_7O_4 \cdot H_2O$ (Mol 335)

Gefunden : C % 43,5 H % 3,9 N % 29,9

Theorie : C % 42,9 H % 3,88 N % 29,2.

Beispiel 59

99 g Polyamid-Granulat aus ε-Caprolactam (Polyamid 6) werden mit 1 g Azofarbstoff der Formel

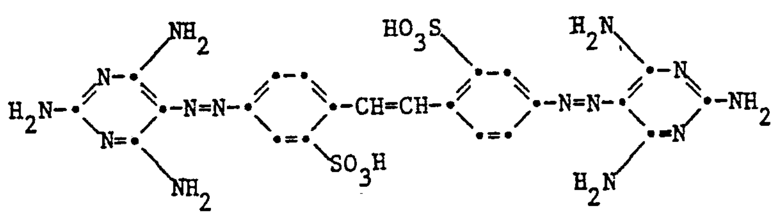

trocken paniert. Die so behandelten Schnitzel werden bei 270-280° in einem Extruder versponnen. Es entsteht ein gleichmässig gelb-orange gefärbtes Fasermaterial mit hohen Wäsche-, Shampoo-, Lösungsmittel-, Trockenhitze- und Reibechtheiten.

Beispiel 60

Ebenfalls sehr echte gleichmässig gefärbte Fasern erhält man durch Massefärbung von Polyamid 6 analog den Beispielen 1-3 und 59 unter Verwendung eines in Tabelle 3 aufgeführten Azofarbstoffs.

(Siehe Tabelle 3 Seite 11 f.).

Tabelle 3

| Bsp. | Azofarbstoff aus | | Nuance PA 6 |
|---|---|---|---|
| | Diazokomponente | Kupplungskomponente | |
| 61 | 3-Aminoindazol | Mischung aus 2,4-Diamino-6-(3'sulfophenylamino)-pyrimidin und der isomeren 2,6,4-Verbindung | gelb |
| 62 | 6-Aminoindazol | dito | gelb |
| 63 | 3,3'-Dichlorbenzidin | dito, 2-Aequivalente | rot |

**Ansprüche**

1. Verfahren zum Färben faserbildender Polyamide in der Masse, dadurch gekennzeichnet, dass man als Farbstoffe Azofarbstoffe der Formel

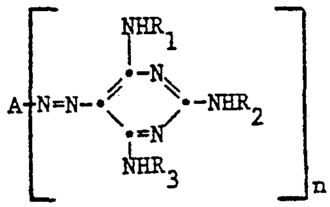

verwendet, worin A den Rest einer Diazo- oder Tetrazokomponente, $R_1$, $R_2$ und $R_3$ H-Atome, Alkyl-, Cycloalkyl-, Phenylalkyl- oder Arylreste und n die Zahl 1 oder 2 bedeuten.

2. Verfahren gemäss Anspruch 1, gekennzeichnet durch die Verwendung von Monoazofarbstoffen, worin A einen Phenyl- oder Naphthylrest bedeutet.

3. Verfahren gemäss Ansprüchen 1-2, gekennzeichnet durch die Verwendung von Farbstoffen, die 1 oder 2 Sulfonsäure- und oder Carbonsäuregruppen im Molekül enthalten.

4. Verfahren gemäss Ansprüchen 1-3, gekennzeichnet durch die Verwendung von Monoazofarbstoffen worin A einen Rest der Formel

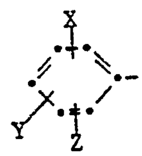

bedeutet, worin X ein H oder Halogenatom, eine Alkyl- oder Alkoxygruppe mit 1-6 C, eine Alkoxycarbonylgruppe mit 2-6 C, eine Nitro- Cyan- oder Trifluor-methyl-, Sulfo- oder Carboxylgruppe oder Alkanoylaminogruppe mit 2-6 C, eine gegebenenfalls durch Chloratome, Methyl- oder Methoxygruppen substituierte Phenoxy-, Phenylcarbamoyl-, Phenylsulfonyl-, Phenoxycarbonyl- oder Phenoxysulfongruppe oder eine Gruppe der Formel

$$-SO_2NR_4R_5$$

worin $R_4$ ein H-Atom, eine Alkylgruppe mit 1-6 C, eine gegebenenfalls durch Chloratome oder Methylgruppen substituierte Phenylgruppe, $R_5$ ein H-Atom oder eine Alkylgruppe mit 1-6 C bedeutet, Y ein H- oder Halogenatom, eine Methyl-, Carboxyl- oder Sulfogruppe und Z ein H- oder Halogenatom, oder eine Methylgruppe bedeuten.

5. Verfahren gemäss Ansprüchen 1-4, gekennzeichnet durch die Verwendung von Farbstoffen der Formel

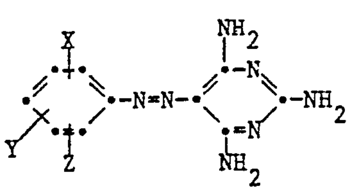

worin X, Y und Z die im Anspruch 4 angegebene Bedeutung haben.

6. Verfahren gemäss Ansprüchen 1-4, gekennzeichnet durch die Verwendung von Farbstoffen der Formel

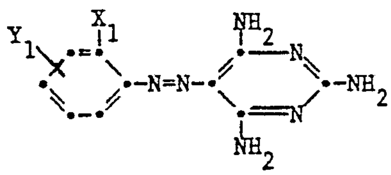

worin $X_1$ eine Carbonsäure- oder Sulfonsäuregruppe, $Y_1$ ein H-Atom, eine Methyl- oder eine Carbonsäuregruppe bedeuten.

7. Verfahren gemäss Ansprüchen 1-4, gekennzeichnet durch die Verwendung von Farbstoffen der Formel

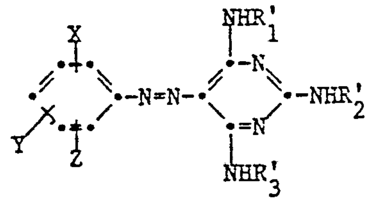

worin X, Y und Z die im Anspruch 4 angegebene Bedeutung haben, einer der Reste $R_1'$, $R_2'$ und $R_3'$ eine gegebenenfalls durch Chloratome, Methyl- oder Methoxygruppen substituierte Sulfophenylgruppe, die übrigen H-Atome, Alkylgruppen mit 1-6 C oder gegebenenfalls durch Chloratome, Methyl- oder Methoxygruppen substituierte Phenylgruppen bedeuten.

8. Verfahren gemäss Anspruch 1, gekennzeichnet durch die Verwendung von Farbstoffen der Formel

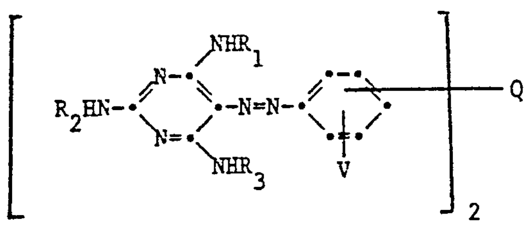

worin $R_1$, $R_2$ und $R_3$ die im Anspruch 1 angegebene Bedeutung, Q eine direkte Bindung, oder ein Brückenglied, V ein H- oder Chloratom, eine Methyl- oder Methoxygruppe bedeuten.

9. Faserbildendes Polyamid enthaltend einen Azofarbstoff gemäss Anspruch 1.

**Claims**

1. A process for colouring fibre forming polyamides in the melt, which process comprises the use of an azo pigment of the formula

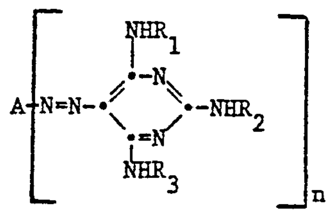

wherein A is the radical of a diazo or tetraazo component, $R_1$ and $R_2$ are hydrogen atoms or alkyl, cycloalkyl, phenylalkyl or aryl radical, and n is 1 or 2.

2. A process according to claim 1, which comprises the use of a monoazo pigment, wherein A is a phenyl or naphthyl radical.

3. A process according to either of claims 1 or 2, which comprises the use of a pigment which contains 1 or 2 sulfo and/or carboxyl groups in the molecule.

4. A process according to any one of claims 1 to 3, which comprises the use of a monoazo pigment, wherein A is a radical of the formula

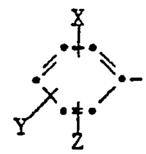

wherein X is a hydrogen or halogen atom, an alkyl or alkoxy group, each of 1 to 6 carbon atoms, an alkoxycarbonyl group of 2 to 6 carbon atoms, a nitro, cyano or trifluoromethyl group, a sulfo or carboxyl group, or an alkanoylamino group of 2 to 6 carbon atoms, a phenoxy, phenylcarbamoyl, phenylsulfonyl, phenoxycarbonyl or phenoxysulfonyl group, each of is unsubstituted or substituted by chlorine atoms or by methyl or methoxy groups, or is a group of the formula

$$SO_2NR_4R_5$$

wherein $R_4$ is a hydrogen atom, an alkyl group of 1 to 6 carbon atoms, a phenyl group which is unsubstituted or substituted by chlorine atoms or methyl groups, $R_5$ is a hydrogen atom or an alkyl group of 1 to 6 carbon atoms, Y is a hydrogen or halogen atom, or a methyl, carboxyl or sulfo group, and Z is a hydrogen or halogen atom or a methyl group.

5. A process according to any one of claims 1 to 4, which comprises the use of a pigment of the formula

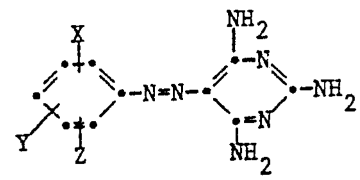

wherein X, Y and Z are as defined in claim 4.

6. A process according to any one of claims 1 to 4, which comprises the use of a pigment of the formula

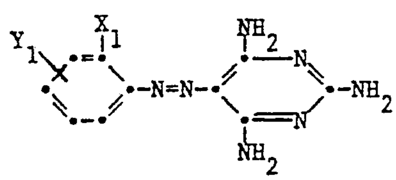

wherein $X_1$ is a carboxyl or sulfo group, $Y_1$ is a hydrogen atom or a methyl or carboxyl group.

7. A process according to any one of claims 1 to 4, which comprises the use of a pigment of the formula

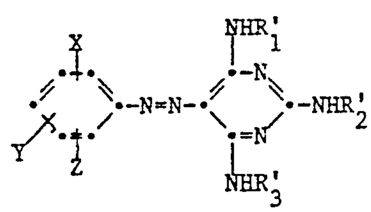

wherein X, Y and Z are as defined in claim 4, one of $R_1'$, $R_2'$, $R_3'$ is a sulfophenyl group which is unsubstituted or substituted by chlorine atoms or methyl or methoxy groups, and the others are hydrogen atoms, $C_1$-$C_6$alkyl groups, or phenyl groups which are unsubstituted or substituted by chlorine atoms or methyl or methoxy groups.

8. A process according to claim 1, which comprises the use of a pigment of the formula

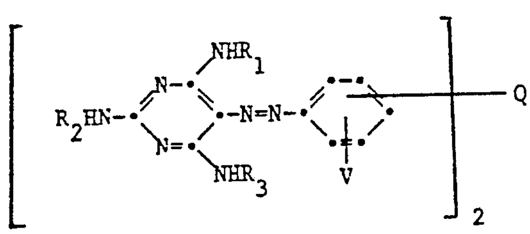

wherein $R_1$, $R_2$ and $R_3$ are as defined in claim 1, Q is a direct bond or a bridge member, and V is a hydrogen or chlorine atom or a methyl or methoxy group.

9. A fibre forming polyamide containing an azo pigment according to claim 1.

**Revendications**

1. Procédé pour teindre dans la masse des polyamides capables de former des fibres, procédé caractérisé en ce qu'on utilise pour cela des colorants azoïques répondant à la formule

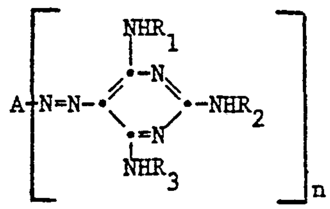

dans laquelle A représente le radical d'une composante de diazotation ou de tétrazotation, $R_1$, $R_2$ et $R_3$ représentent chacun un atome d'hydrogène ou un radical alkyle, cycloalkyle, phénylalkyle ou aryle et n représente le nombre 1 ou le nombre 2.

2. Procédé selon la revendication 1 caractérisé en ce qu'on utilise des colorants mono-azoïques dans lesquels A représente un radical phényle ou naphtyle.

3. Procédé selon l'une des revendications 1 et 2, caractérisé en ce qu'on utilise des colorants qui contiennent un ou deux radicaux sulfo et/ou carboxy dans la molécule.

4. Procédé selon l'une quelconque des revendications 1 à 3, caractérisé en ce qu'on utilise des colorants mono-azoïques dans lesquels A représente un radical répondant à la formule suivante

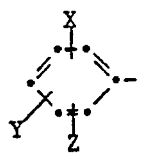

dans laquelle X représente un atome d'hydrogène ou d'halogène, un radical alkyle ou alcoxy contenant de 1 à 6 atomes de carbone, un radical alcoxycarbonyle contenant de 2 à 6 atomes de carbone, un radical nitro, cyano, trifluorométhyle, sulfo ou carboxy, un radical alcanoylamino contenant de 2 à 6 atomes de carbone, un radical phénoxy, phénylcarbamoyle, phényl-sulfonyle, phénoxycarbonyle ou phénoxysulfonyle éventuellement porteur d'atomes de chlore ou de radicaux méthyles ou méthoxy, ou un radical de formule :

$$—SO_2NR_4R_5$$

(où $R_4$ désigne un atome d'hydrogène, un alkyle en $C_1$-$C_6$, ou un phényle éventuellement porteur d'atomes de chlore ou de radicaux méthyles, et $R_5$ représente un atome d'hydrogène ou un alkyle en $C_1$-$C_6$), Y représente un atome d'hydrogène ou d'halogène ou un radical méthyle, carboxy ou sulfo, et Z représente un atome d'hydrogène ou d'halogène ou un radical méthyle.

5. Procédé selon l'une quelconque des revendications 1 à 4, caractérisé en ce qu'on utilise des colorants répondant à la formule

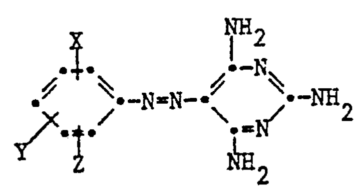

dans laquelle X, Y et Z ont les significations données à la revendication 4.

6. Procédé selon l'une quelconque des revendications 1 à 4, caractérisé en ce qu'on utilise des colorants répondant à la formule

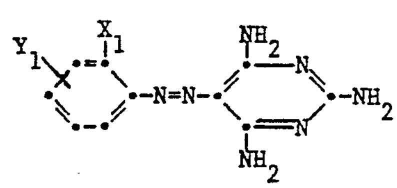

dans laquelle $X_1$ représente un radical carboxy ou sulfo et $Y_1$ représente un atome d'hydrogène ou un radical méthyle ou carboxy.

7. Procédé selon l'une quelconque des revendications 1 à 4, caractérisé en ce qu'on utilise des colorants répondant à la formule

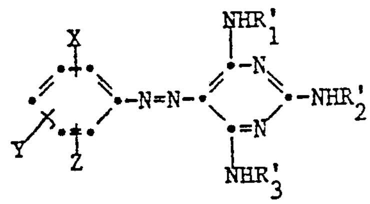

dans laquelle X, Y et Z ont les significations qui ont été données à la revendication 4, l'un des symboles $R_1'$, $R_2'$ et $R_3'$ représente un radical sulfophényle éventuellement porteur d'atomes de chlore ou de radicaux méthyles ou méthoxy, et les autres représentent chacun un atome d'hydrogène, un alkyle en $C_1$-$C_6$ ou un phényle éventuellement porteur d'atomes de chlore ou de radicaux méthyles ou méthoxy.

8. Procédé selon la revendication 1, caractérisé en ce que l'on utilise des colorants répondant à la formule

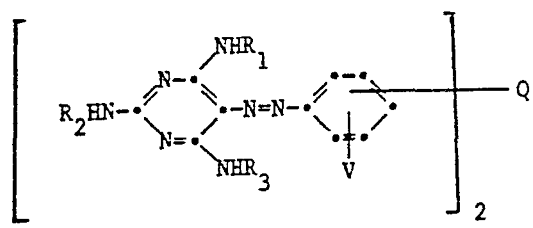

dans laquelle $R_1$, $R_2$ et $R_3$ ont les significations qui ont été données à la revendication 1, Q représente une liaison directe ou un radical formant pont, et V représente un atome d'hydrogène ou de chlore ou un radical méthyle ou méthoxy.

9. Polyamide capable de former des fibres, caractérisé en ce qu'il comprend un colorant azoïque selon la revendication 1.